# EUROPÄISCHE PATENTSCHRIFT

(11) **EP 2 183 497 B1**
(45) Veröffentlichungstag und Bekanntmachung des Hinweises auf die Patenterteilung: **20.06.2012**
(21) Anmeldenummer: 08774525.3
(22) Anmeldetag: 30.06.2008
(51) Int. Cl.: F16D 25/08

(54) **DRUCKMITTELBETÄTIGTER KUPPLUNGSAKTUATOR**
PRESSURE-MEDIUM-ACTUATED CLUTCH ACTUATOR
ACTIONNEUR D'EMBRAYAGE COMMANDÉ PAR UN MILIEU SOUS PRESSION

(30) Priorität: 26.07.2007 DE 102007034846
(43) Veröffentlichungstag der Anmeldung: 12.05.2010
(73) Patentinhaber: Schaeffler Technologies AG & Co. KG, 91074 Herzogenaurach (DE)
(72) Erfinder: WINKELMANN, Ludwig, 91056 Erlangen (DE)
(86) Internationale Anmeldenummer: PCT/EP2008/058371
(87) Internationale Veröffentlichungsnummer: WO 2009/013096

(56) Entgegenhaltungen:
- DE-A1- 4 313 346
- DE-A1- 19 524 312
- DE-A1- 19 755 494

## Beschreibung

### Gebiet der Erfindung

Die Erfindung richtet sich auf einen mittels eines Druckmittels, insbesondere einem Hydraulikfluid betätigten Kupplungsaktuator. Derartige Kupplungsaktuatoren finden insbesondere im Bereich der Fahrzeugtechnik zur Betätigung von Kupplungseinrichtungen die im Leistungsfluss zwischen einem Antriebsmotor und einer Schaltgetriebeeinrichtung angeordnet sind, Anwendung.

Aus DE 197 55 494 A1 ist ein druckmittelbetätigter Kupplungsaktuator bekannt der als solcher eine mit einem Hydraulikfluid beaufschlagte Arbeitskammer umfasst die von einem Ringkolben, einer den Ringkolben verschiebbar führenden Innenbuchse und einer den Ringkolben und die Innenbüchse umgreifenden Bohrungswandung begrenzt ist. An den Ringkolben ist eine Stimdichtung angesetzt die als solche den an den Ringkolben angrenzenden inneren, sowie den äußeren Bewegungsspalt gegenüber dem vom Hydraulikfluid erfüllten Abschnitt der Arbeitskammer abdichtet.

Aus US 2007/0029156 A1 ist ebenfalls ein druckmittelbetätigter Kupplungsaktuator der vorgenannten Art bekannt. Auch dieser Kupplungsaktuator umfasst einen Ringkolben der als solcher einen von einer Stirndichtung abgedichteten Stirnbereich bildet und nach Maßgabe der Befüllung und Druckbeaufschlagung einer Arbeitskammer mit einem Hydraulikfluid innerhalb der Arbeitskammer axial verlagerbar ist.

Aus US 2007/0029156 A1 ist ein weiterer Kupplungsaktuator bekannt der einen aus einem Kunststoffmaterial gefertigten Ringkolben umfasst. Der Ringkolben bildet eine Stirnfläche die einer Arbeitskammer zugewandt ist. Auf dieser Stirnfläche sitzt eine als Elastomer-Dichtring ausgeführte Dichtungseinrichtung.

DE195 24 312 A1 zeigt einen Kupplungsaktuator mit einer Ringkammer, in der ein Ringkolben verschiebbar aufgenommen ist. Der Ringkolben umfasst einen Ringkorpus, der aus einem Kunststoffmaterial gefertigt ist und eine lnnenum*fangswandung, eine Außenumfangswandung, einen Bodenflächenbereich und einen dem Bodenflächenbereich abgewandten Stirnflächenbereich aufweist. Zwischen dem Ringkolben und der Wand der Ringkammer ist ein Bewegungspaltbereich ausgebildet, der mit einer Ringdichtung abgedichtet ist. Der Ringkolben umfasst weiterhin eine sich zwischen dem Bodenflächenbereich und dem Stirnflächenbereich erstreckende, aus einem hochsteifen Werkstoff gefertigte Ringbuchsenstruktur, die mit mehreren Durchbrüchen radial durchsetzt ist. Der Ringkorpus ist im Bereich der Durchbrüche mit der Ringbuchsenstrukturverankert.*

DE 43 13 346 A1 *zeigt eine Ringkolbeneinrichtung für einen Kupplungsaktuator, die mit einer Führungsstruktur, einer Dichtungseinrichtung (7) zur Abdichtung der Ringkolbeneinrichtung, und mit einem Ringkolbenschaft Der Ringkolbenschaft weist einen Dichtungsanbindungsabschnitt zur Anbindung der Dichtungseinrichtung, einen Ausrücklageranbindungsabschnitt zur Anbindung eines Kupplungsausrücklagers, und den sich zwischen dem Dichtungsanbindungsabschnitt und dem Kupplungsausrücklageranbindungsabschnitt erstreckenden Ringkolbenschaft auf.*

Kupplungsaktuatoren der vorgenannten Art finden aufgrund des relativ geringen Bauraumbedarfs zunehmend an Bedeutung.

Der Erfindung liegt die Aufgabe zugrunde, Lösungen zu schaffen die bei der Herstellung von Kupplungsaktuatoren der vorgenannten Art unter fertigungstechnischen, sowie unter funktionstechnischen Gesichtspunkten Vorteile gegenüber bisherigen Konzepten bieten. *Dabei ist besonderes Augenmerk auf die Gestaltung der Ringkolben, beispielsweise auf die Verankerung der Führungsstruktur dieser zu richten.*

Diese Aufgabe wird erfindungsgemäß gelöst durch einen Kupplungsaktuator : *nach Anspruch 1 gelöst.*

*Gemäß Erfindung ist die Ringbuchsenstruktur derart gestaltet, dass diese einen in den Bodenflächenbereich eintauchenden Axialendabschnitt aufweist, wobei in diesem Axialendabschnitt die Ringbuchsenstruktur mit einem radial nach außen auskragenden Ringrand versehen ist. Durch diese Gestaltung der Ringbuchsenstruktur wird eine hohe Verformungssteifigkeit der Ringbuchsenstruktur erreicht. Zudem wird es möglich, die von der Ringbuchsenstruktur übertragenen Axialkräfte unter einer relativ geringen Flächenpressung in das zur Bildung des Bodenflächenbereichs des Ringkorpus' beitragende Kunststoffmaterial einzuleiten.*

Dadurch wird es auf vorteilhafte Weise möglich, einen Kupplungsaktuator mit einem mechanisch hoch belastbaren Ringkolben zu schaffen, wobei der Ringkolben prozesssicher unter Einhaltung geringer Bauteiltoleranzen kostengünstig herstellbar ist. Durch das erfindungsgemäße Konzept wird es auch möglich, das Wärmedehnungsverhalten des Ringkolbens an das Wärmedehnungsverhalten der für die Bereitstellung der Arbeitskammer maßgeblichen Strukturbauteile anzupassen, so dass auch bei deutlich außerhalb des typischen Funktionstemperaturbereichs liegenden Temperaturen keine unzulässigen Bewegungsspaltverengungen, oder Erweiterungen auftreten.

Vorzugsweise ist die Ringbuchsenstruktur aus einem Stahlmaterial, insbesondere Stahlblechzuschnitt gefertigt. Die spezielle Bauteilgeometrie der Ringbuchsenstruktur kann insbesondere durch Tiefziehumformung des Stahlblechzuschnittes erreicht werden. Alternativ zu einer Tiefziehumformung des Blechzuschnittes ist es auch möglich, die Ringbuchsenstruktur aus einem Stahlblechstreifen als gewickeltes Bauteil zu fertigen. Die Ringbuchsenstruktur wird hierbei vorzugsweise derart gebildet, dass der zu einer Ringbuchse gewickelte bzw. gebogene Blechstreifen im Bereich der aneinander stoßenden Abschnitte über eine Axial-Stoßstelle geschlossen ausgeführt ist. Im Bereich dieser Axial-Stoßstelle kann insbesondere eine Schweißnaht ausgebildet sein, durch welche eine stoffschlüssige Verankerung der beiden Endabschnitte des gewickelten Zuschnitts erreicht wird. Diese Schweißnaht kann insbesondere als Widerstands-Schweißnaht ausgeführt sein. Alternativ zu dieser Ausbildung der Axial-Stoßstelle ist es auch möglich, die aneinander grenzenden Flanken über Eingriffsstrukturen, beispielsweise durch in Umfangsrichtung hinterschnittene Eingriffsstrukturen zu schließen. Es ist auch möglich, die Ringbuchsenstruktur im Bereich der Axial-Stoßstelle anderweitig zu schließen, insbesondere zu vernieten, zu verkrallen oder auch zu clinchen.

Vorzugsweise weist die Ringbuchsenstruktur auch einen in den Stimflächenbereich des Ringkorpus' eintauchenden Stimendabschnitt auf, wobei die Ringbuchsenstruktur in diesem Bereich ebenfalls mit einem nach außen auskragenden Ringrand versehen ist.

Es ist möglich, die Ringbuchsenstruktur so zu gestalten, dass durch diese ein Befestigungsabschnitt zur Fixierung eines Kupplungsausrücklagers bzw. einer das Kupplungsausrücklager tragenden Klammer bereitgestellt ist. Die Ringbuchsenstruktur kann hierzu mit einem aus dem Bodenbereich des Ringkorpus' hervorstehenden Überstandsbereich versehen sein oder zumindest einen im Bodenbereich des Ringkorpus' zumindest abschnittsweise freiliegenden Bereich aufweisen, wobei in diesem Überstandsbereich, oder an den freiliegenden Stellen Befestigungsabschnitte ausgebildet sein können, die letztlich eine Sicherung des Kupplungsausrücklagers ermöglichen.

An der Ringbuchsenstruktur kann weiterhin auch ein aus dem Stimflächenbereich des Ringkorpus' hervorstehender, oder zumindest abschnittsweise in diesem Bereich freiliegender Fixierungsabschnitt ausgebildet sein, an welchem die Ringdichtung angebracht ist.

Es ist auch möglich, die Ringdichtung unmittelbar an die Ringbuchsenstruktur stofflich anzubinden, insbesondere anzuvulkanisieren. Weiterhin ist es auch möglich, die Ringdichtung an einer Ringklammerstruktur zu fixieren und diese Ringklammerstruktur mit der Ringbuchsenstruktur zu verrasten.

Alternativ zu der oben angegebenen Lösung zur Fertigung der Ringbuchsenstruktur aus einem Metall-Blechzuschnitt ist es auch möglich, die Ringbuchsenstruktur beispielsweise durch ein Druckgussverfahren aus anderweitigen Metallwerkstoffen, insbesondere Aluminium- oder auch Zink-Druckguss zu fertigen. Es ist auch möglich, die Ringbuchsenstruktur aus einem verstärkten Kunststoffmaterial, wie zum Beispiel Thermo- oder Duroplast mit mindestens 45% Füllstoffanteil in Form von Glaskugeln, Glasfasern oder geeigneten mineralischen Füllstoffen zu fertigen und das zur Bildung des eigentlichen Ringkorpus' vorgesehene Kunststoffmaterial an diese als Versteifungsstruktur fungierende Ringbuchsenstruktur mit Durchbrüchen anzuspritzen.

Die Ringbuchsenstruktur kann insbesondere im Bereich der Kontaktstellen zum Ringkorpus mit einer Haftvermittlerbeschichtung versehen sein.

Die eingangs angegebene, der Erfindung zugrunde liegende Aufgabe wird gemäß einem weiteren Aspekt der vorliegenden Erfindung auch durch eine Ringkolbeneinrichtung mit *den in einem weiteren Hauptanspruch* angegebenen Merkmalen gelöst.

Weitere Einzelheiten und Merkmale der Erfindung ergeben sich aus der nachfolgenden Beschreibung in Verbindung mit der Zeichnung. Es zeigt:
- **Figur 1a**: eine Axial-Schnittansicht zur Erläuterung des Aufbaus eines erfindungsgemäßen Kupplungsaktuators in eingerücktem Zustand (obere Schnitthälfte) sowie ausgerücktem Zustand (untere Schnitthälfte),
- **Figur 1b**: eine weitere Axial-Schnittdarstellung zur Veranschaulichung des Aufbaus eines Kupplungsaktuators gemäß einer zweiten Ausführungsform der Erfindung mit einer über eine Ringklammer an den Ringkolben angebundenen Ringdichtung,
- **Figur 1c**: eine Axial-Schnittdarstellung durch einen Kupplungsaktuator gemäß einer dritten Ausführungsform der Erfindung,
- **Figur 2a**: eine Axial-Schnittansicht zur Veranschaulichung eines Kupplungsaktuators gemäß einer vierten Ausführungsform der Erfindung,
- **Figur 2b**: eine Detail-Schnittdarstellung zur Veranschaulichung der Verankerung des Ringkorpus' an der Ringbuchsenstruktur,
- **Figur 2c**: eine weitere Detail-Schnittdarstellung zur Veranschaulichung einer weiteren Variante zur Verankerung des die Führungsflächen bereitstellenden Ringkorpus' an der Ringbuchsenstruktur.

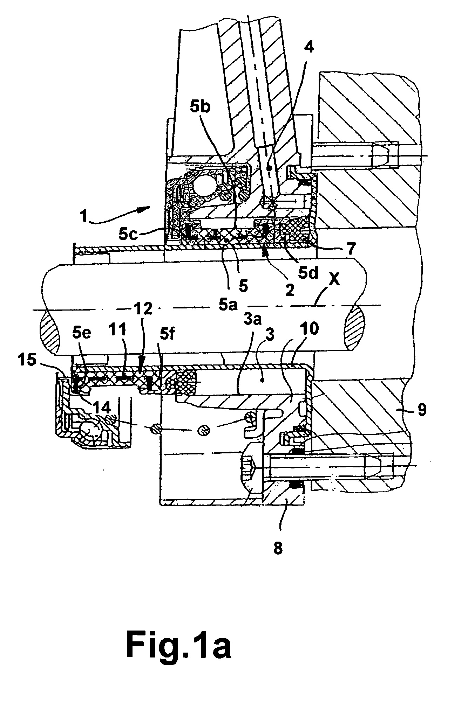

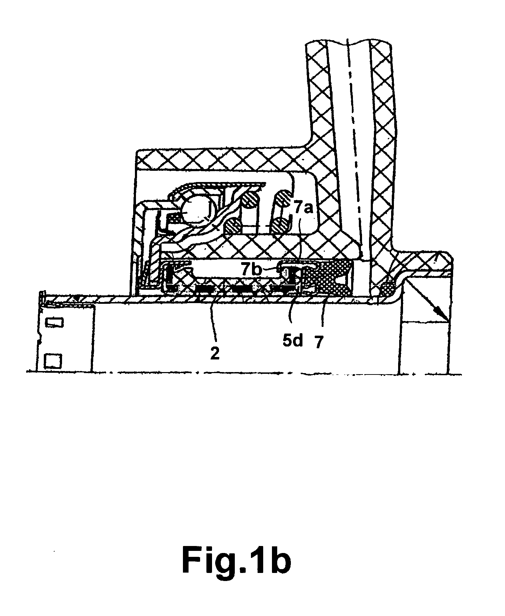

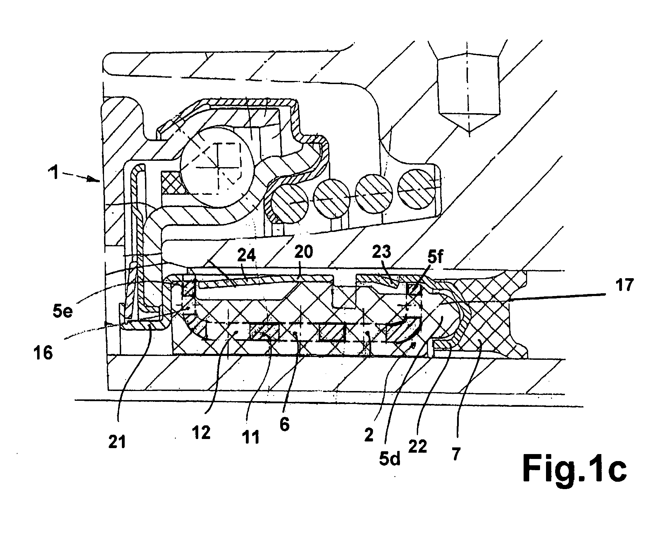

Figur 1 a zeigt einen Kupplungsaktuator zur axialen Verlagerung eines hier als Wälzlager ausgeführten Kupplungsausrücklagers 1. Der Kupplungsaktuator umfasst einen Ringkolben 2, der als solcher in einer Ringkammer 3 aufgenommen ist und nach Maßgabe eines über einen Druckmittelkanal 4 zugeführten Hydraulikfluides parallel zu einer Getriebewellenachse X in der Ringkammer 3 axial verlagerbar ist.

Der Ringkolben umfasst einen aus einem Kunststoffmaterial gefertigten Ringkorpus 5. Der Ringkorpus bildet eine hier als Führungsfläche fungierende Innenumfangswandung 5a und eine unter Belassung eines größeren Zwischenraumes der Innenwandung 3a der Ringkammer 3 zugewandte Außenumfangswandung 5b. Der Ringkorpus 5 bildet weiterhin einen hier unmittelbar das Kupplungsausrücklager 1 axial unterstützenden Bodenflächenbereich 5c sowie einen dem Bodenflächenbereich 5c abgewandten Stirnflächenbereich 5d.

An diesem Stirnflächenbereich 5d ist eine Ringdichtung 7 befestigt, die als solche den selektiv mit Druckmittel beaufschlagten Bereich der Ringkammer 3 gegenüber dem Ringkorpus 2 des Kupplungsaktuators abdichtet. Die Ringdichtung 7 ist in an sich bekannter Weise aus einem Elastomermaterial gefertigt und derart ausgebildet, dass diese sich unter Wirkung des über den Druckmittelkanal 4 zugeführten Druckmittels, insbesondere Hydraulikfluid abdichtend an die angrenzenden Wandungen der Ringkammer 3 anlegt.

Bei dem hier gezeigten Ausführungsbeispiel ist die Innenwandung 3a der Ringkammer 3 durch ein Aktuatorflanschgehäuse 8 gebildet, das an ein Getriebegehäuse 9 angeschraubt ist. In dieses Aktuatorflanschgehäuse 8 ist unter Belassung des zur Bildung der Ringkammer 3 erforderlichen Radialabstands eine Führungsbuchse 10 eingesetzt, die als solche die Innenwandung 3a der Ringkammer 3 bildet.

Der hier dargestellte Kupplungsaktuator zeichnet sich dadurch aus, dass in den Ringkolben 2 eine sich zwischen dem Bodenflächenbereich 5c und dem Stirnflächenbereich 5d erstreckende, aus einem hochsteifen Werkstoff gefertigte Ringbuchsenstruktur 11 eingesetzt ist, wobei diese Ringbuchsenstruktur 11 mit mehreren, die Ringbuchsenstruktur 11 radial durchsetzenden, Durchbrüchen 12 versehen ist, wobei der Ringkorpus 5 im Bereich dieser Durchbrüche 12 mit der Ringbuchsenstruktur 11 verankert ist.

Bei dem hier gezeigten Ausführungsbeispiel sind die Durchbrüche 12 durch Radialbohrungen gebildet, die in Umfangsrichtung abfolgend die Ringbuchsenstruktur 11 durchsetzen. Bei dem hier gezeigten Ausführungsbeispiel sind insgesamt drei Reihen von kleineren Durchbrüchen 12 in der Ringbuchsenstruktur 11 ausgebildet. Die Größe dieser Durchbrüche 12 sowie die Lage derselben in der Ringbuchsenstruktur 11 ist derart gewählt, dass sich einerseits eine möglichst wirkungsvolle Verankerung des zur Bildung des Ringkorpus' beitragenden Kunststoffmateriales an der Ringbuchsenstruktur 11, andererseits jedoch keine unzulässig starke Schwächung der Ringbuchsenstruktur 11 ergibt. Die Kanten dieser Durchbrüche 12 sind vorzugsweise leicht gerundet oder zumindest leicht abgefast ausgebildet, um eine möglichst spannungsspitzenfreie Kraftübertragung zwischen der Kunststoffstruktur und der in diese eingebetteten Ringbuchsenstruktur 11 zu erreichen.

Bei dem hier gezeigten Ausführungsbeispiel ist das zur Bildung des Ringkorpus' 2 vorgesehene Kunststoffmaterial im Rahmen eines Insert-Mouldingprozesses an die Ringbuchsenstruktur 11 angespritzt.

Über den Ringkorpus 5 können geometrisch relativ aufwendige Führungsflächengeometrien, z.B. relativ feine Längssicken sowie auch zur Anbindung der Kupplungsausrücklagereinrichtung 1 sowie der Ringdichtung 7 erforderliche Detailgeometrien in vorteilhafter Weise realisiert werden.

Bei dem hier gezeigten Ausführungsbeispiel ist die Ringbuchsenstruktur 11 aus einem Stahlmaterial gefertigt. Die Ringbuchsenstruktur 11 kann hierbei als Tiefziehbauteil, oder vorzugsweise als gewickeltes und im Bereich der hierbei gebildeten axialen Stoßstellen geschlossene Ringstruktur gefertigt sein. Diese hier nicht näher erkennbaren Axial-Stoßstellen können durch Schweißnähte, durch miteinander formschlüssig in Eingriff stehende Verkrallungsstrukturen sowie durch Niet- und/oder Clinchverbindungen geschlossen sein. Bei dem Ausführungsbeispiel gemäß Figur 1a ist die Ringbuchsenstruktur sowohl in ihrem in den Bodenflächenbereich 5c als auch in ihrem in den Stirnflächenbereich 5d vordringenden, axialen Endabschnitt jeweils mit einem nach außen auskragenden Ringrand 5e bzw. 5f versehen. Durch diese Ringränder 5e, 5f wird die Axialkraftübertragung zwischen dem zur Bildung des Ringkorpus' 2 herangezogenen Kunststoffmaterial sowie der in den Ringkorpus 2 eingebundenen Ringbuchsenstruktur 11 verbessert. Wie aus dieser Darstellung ersichtlich, ist es möglich, über die in den Bodenflächenbereich 5c sowie gegebenenfalls auch in den Stirnflächenbereich 5d des Ringkorpus' vordringenden axialen Endabschnitte der Ringbuchsenstruktur 11 Befestigungsabschnitte zu bilden, über welche die Kupplungsausrücklagereinrichtung 1 (wie abgebildet) oder auch die Ringdichtung 7 besonders wirkungsvoll an den Ringkolben 2 angebunden werden kann.

Bei dem Ausführungsbeispiel gemäß Figur 1a bildet der radial nach außen auskragende Ringrand 5e einen Stützwandabschnitt, an welchem eine Rastzunge 14 einer das Ausrücklager 1 tragenden Ringklammer 15 verrastet ist. Die Ringklammer 15 ist derart ausgebildet, dass diese eine dem Ringkolben 2 zugewandte Sitzfläche bildet, die auf einer durch den Ringkorpus 2 gebildeten Kunststoff-Stirnfläche aufsitzt und zudem von dem radial nach außen auskragenden Ringrand 5e axial unterstützt ist. Durch die hier gezeigte Anordnung wird eine besonders zuverlässige und mechanisch hoch belastbare Anbindung der Kupplungsausrücklagereinrichtung 1 an den Ringkolben 2 erreicht.

Bei dem hier gezeigten Ausführungsbeispiel ist der Ringkolben so gestaltet, dass die Ringbuchsenstruktur 11 derart tief in den Ringkorpus eingebettet ist, dass sowohl auf der, der Führungshülse 10 zugewandten Innenseite der Ringbuchsenstruktur 11, als auch im Bereich der, der Innenwandung 3a zugewandten Außenseite des Ringkorpus' ein aus Kunststoffmaterial gefertigter Mantelbereich verbleibt dessen Dicke vorzugsweise relativ gering, insbesondere ca. 0,8 mm ist oder auch in etwa der Blech-, oder Manteldicke der Ringbuchsenstruktur 11 entspricht. Bei dem Ausführungsbeispiel gemäß Figur 1a ist der Ringkolben 2 als Schiebehülse ausgeführt, die als solche durch eine umspritzte Stahlhülse gebildet ist. Die Stahlhülse ist am Außendurchmesser mit Kunststoff mit einer Wanddicke von wenigstens 0,8 mm umspritzt. Durch am Umfang des zylindrischen Abschnitts der Stahlhülse ausgebildete Bohrungen wird das Fließen und Umströmen der Kunststoffmasse während des Spritzvorganges erleichtert und eine feste Umklammerung des Stahlflansches durch den Kunststoff ermöglicht.

Für das Ausführungsbeispiel gemäß Figur 1b gelten die vorangegangenen Ausführungen weitgehend sinngemäß. Abweichend von dem Ausführungsbeispiel gemäß Figur 1a ist bei der Variante nach Figur 1b die Ringdichtung 7 über eine Ringdichtungshalteklammer 7a an den Ringkorpus des Ringkolbens 2 angebunden. Die Ringdichtungshalteklammer 7a ist derart ausgebildet, dass durch diese die Ringdichtung 7 in axialer Richtung an dem Ringkolben 2 verankert ist. Die Ringdichtungshalteklammer 7a weist hierzu einen den Ringkolben 2 im Bereich seines Stirnendes 5d übergreifenden Ringabschnitt auf, an welchem ein Fixierbord 7b ausgebildet ist, der als solcher einen im Stirnbereich 5d ausgebildeten, radial nach außen auskragenden Ringsteg oder Schulterrand hintergreift.

Für das Ausführungsbeispiel gemäß Figur 1c gelten die vorangegangenen Ausführungen zum Ausführungsbeispiel nach den Figuren 1a und 1b sinngemäß. In weiterer Abwandlung der vorangehend beschriebenen Ausführungsbeispiele sind bei dieser Ausführungsform gemäß Figur 1c auch im Bereich der Ringränder 5e, 5f Durchbrechungen 16, 17 vorgesehen, durch welche die Verhaftung des zur Bildung des Ringkolbens 2 beitragenden Kunststoffmateriales mit der Ringbuchsenstruktur 11 noch weiter unterstützt wird. Auch bei diesem Ausführungsbeispiel ist die Ringbuchsenstruktur 11 auch im Bereich der durch diese gebildeten Umfangswandung mit radialen Durchgangsöffnungen bzw. Durchbrechungen 12 versehen.

In den hier gezeigten Ringkolben 2 ist eine diesen von innen her hintergreifende Haltehülse 20 eingesetzt. Die Haltehülse 20 umfasst einen das Kupplungsausrücklager 1 tragenden Halteflanschabschnitt 21 sowie einen die Ringdichtung 7 tragenden Halterand 22. Die Ringdichtung 7 ist an diesen Halterand 22 anvulkanisiert. Der Halterand 22 ist hierzu im Bereich seiner der Ringdichtung 7 zugewandten Außenfläche aufgeraut ausgeführt und vorzugsweise auch mit einem den Anvulkanisiervorgang unterstützenden chemischen Haftvermittler beschichtet. Der Halterand 22 ist bei diesem Ausführungsbeispiel als Ringrinnenstruktur ausgeführt, die eine dem Ringkolben 2 zugewandte Innenrinne bildet. Diese Innenrinne sitzt auf einer durch den Stirnflächenbereich 5d gebildeten Ringfläche auf und zentriert sich dabei selbsttätig auf dem Ringkolben 2. Die Haltebuchse 2 ist mit Eingriffsklauen 23, 24 versehen, die hier mit den durch die Borde 5e, 5f gebildeten Radialwandungen bzw. Ringschultern in Eingriff treten und hierdurch die Haltehülse 20 in axialer Richtung zusätzlich an dem Ringkolben 2 sichern. Die Ringbuchsenstruktur 2 kann durch mehrere Ringbuchsensegmente oder auch als axial geschlitzte Struktur ausgebildet sein, sodass diese derart verformt werden kann, dass diese von innen in die Haltehülse 20 einsetzbar ist.

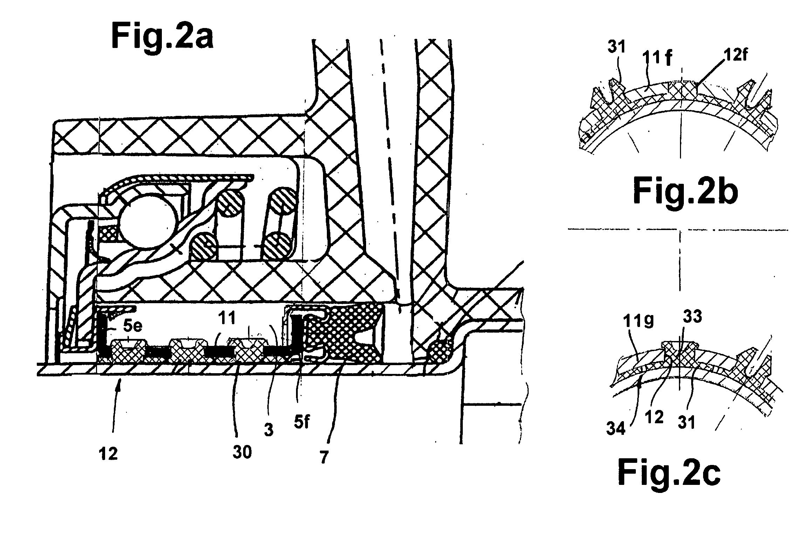

In Figur 2a ist eine vierte Ausführungsform einer erfindungsgemäßen Kupplungsausrücklagereinrichtung dargestellt, die hier einen Kupplungsaktuator umfasst, der einen in einer Ringkammer 3 aufgenommenen Ringkolben umfasst. Dieser Ringkolben umfasst eine aus einem Kunststoffmaterial gefertigte Führungsstruktur 30, eine Ringdichtung 7 und einen Ringkolbenschaft 11, der einen Dichtungsanbindungsabschnitt 5f und einen Kupplungsausrücklageranbindungsabschnitt 5e umfasst. Der Ringkolbenschaft 11 ist aus einem Stahlmaterial gefertigt und mit mehreren, den Ringkolbenschaft radial durchsetzenden Durchbrechungen 12 versehen. Über diese Durchbrechungen 12 ist die Führungsstruktur 30 an der Ringbuchsenstruktur 11e verankert.

Die Führungsstruktur 30 ist bei diesem Ausführungsbeispiel aus mehreren Kunststoffsegmenten gebildet, wobei diese Kunststoffsegmente von innen her an den Ringkolbenschaft 11 angesetzt sind.

Die Kunststoffsegmente sind vorzugsweise so ausgebildet, dass durch diese eine längsprofilierte Innenwandung gebildet wird, die leichtgängig auf einer durch eine Innenbuchse bereitgestellten zylindrischen Führungsfläche verschiebbar ist.

Wie aus dem Beispiel gemäß Figur 2b ersichtlich, ist es möglich, die Kunststoffsegmente 30 radial von innen her an den Ringkolbenschaft 11f anzusetzen und über Verankerungsstrukturen 31, die als solche die Durchbrechungen 12f radial durchsetzen und die Außenwandung des Schafts 11f hintergreifen, zu verankern.

Figur 2c zeigt eine Variante zur Verankerung der Führungsstruktur 30 an dem Schaft 11 g, wobei bei diesem Ausführungsbeispiel die Verankerung der Führungsstruktur durch thermische Umformung, insbesondere Ultraschall-Schmelzen von Zapfenabschnitten 33 erreicht wird, die derart ausgebildet sind, dass diese ebenfalls die Durchbrüche 12 radial durchsetzen und dabei Wulstabschnitte bilden, durch welche die an die Durchbrechungen 12 angrenzende, die Durchbrechungen umsäumende Wandung des Schafts 11g hintergriffen wird.

Die Segmente der Führungsstruktur 30 können so ausgebildet sein, dass zwischen benachbarten Segmenten 31 jeweils kleine Spalte 34 verbleiben, sodass ein ausreichender Bewegungsraum für temperaturbedingte Volumenänderungen der Führungssegmente 30 verbleibt.

Durch die geringe Materialwandung sind entsprechend geringe Kunststoffmassen bei der Temperaturschwankung an einer Durchmesserveränderung beteiligt. Hinzu kommt, dass durch die Verbindung der inneren Kunststoffwandung und der äußeren Kunststoffauflage über die Bohrungen im zylindrischen Abschnitt der Stahlhülse zusätzliche Haltekräfte einer Durchmesserveränderung entgegenwirken. Das Umspritzen des Stahlflansches in der vorgeschlagenen Ausführung ermöglicht eine prozesssichere Einhaltung von relativ kleinen Toleranzen, insbesondere der Bohrungstoleranz der Führungsstruktur.

Durch das erfindungsgemäße Konzept wird eine Verbesserung der Führungseigenschaften der Schiebehülse auf der Führungshülse durch Verringerung des Schiebehülsen-Kippspiels aufgrund des erfindungsgemäß realisierbaren extrem geringen Führungsspieles. Durch das erfindungsgemäße Konzept ergibt sich weiterhin eine Erhöhung der axialen Steifigkeit durch die Stahlhülse. Weiterhin ergibt sich eine Erhöhung der Haltefestigkeit der Schnappverbindung, z.B. des Bördelrings mit der Schiebehülse durch die Stahlkante 8. Weiterhin ergibt sich eine kostengünstige Herstellung des Stützrings wenn die Stahlhülse als gewickeltes Teil hergestellt wird.

In weiterer Ausgestaltung wird nach den Figuren 2a, 2b und 2c vorgeschlagen, die Kunststofflaufflächen in der Bohrung der Schiebehülse als Kunststoffsegmentstreifen auszubilden. Diese Kunststoffsegmentstreifen werden in der Stahlhülse über Bohrungen mittels Schnappverbindung oder Heißprägen fixiert. In Figur 2b sind die Streifen als Einzelsegmente ausgeführt, in Figur 2b beispielhaft gegenüber der Variante nach Figur 2c größere Einzelsegmente an der Stahlhülse fixiert. Als Ausführungsvariante zuvor wird ferner vorgeschlagen, Kunststoffstreifen fixiert in eine Metall- Profilhülse form- , kraft- oder stoffschlüssig einzubinden. Das Profil kann als gezogene Hülse, als aus einem Band gewickelt, als Vielkeilprofil gezogen oder als Sinterteil hergestellt werden.

Die Kunststoffstreifen können als einzelne Streifen in die Nuten eingelegt, als offener Käfigverband in die Nuten eingeschnappt oder durch Anspritzen der Nuten angeformt werden. In weiterer Ausgestaltung der Neuerung wird vorgeschlagen, den Dichtring direkt an die Metallschiebehülse durch einen Vulkanisierprozess anzuformen.

Vorteil: Durch das geringe einhaltbare Spiel wird der Dichtring durch die geringen Taumelbewegungen der Schiebehülse weniger beansprucht und kann deshalb direkt anvulkanisiert werden.

## Patentansprüche

1. Kupplungsaktuator mit:
- einer Ringkammer (3),
- einem Ringkolben (2) der in der Ringkammer (3) verschiebbar aufgenommen ist,
- wobei der Ringkolben (2) einen Ringkorpus (5) umfasst der aus einem Kunststoffmaterial gefertigt ist und eine Innenumfangswandung (5a), eine Außenumfangswandung (5b), einen Bodenflächenbereich (5c) und einen dem Bodenflächenbereich abgewandten Stirnflächenbereich (5d) aufweist, und
- einer Ringdichtung (7) zur Abdichtung des Bewegungsspaltbereiches des Ringkolbens (2)
- der Ringkolben (2) weiterhin eine sich zwischen dem Bodenflächenbereich (5c) und dem Stirnflächenbereich (5d) erstreckende, aus einem hochsteifen Werkstoff gefertigte Ringbuchsenstruktur (11) umfasst,
- wobei diese Ringbuchsenstruktur (11) mit mehreren, die Ringbuchsenstruktur (11) radial durchsetzenden Durchbrüchen (12) versehen ist, und der Ringkorpus (5) im Bereich der Durchbrüche (12) mit der Ringbuchsenstruktur (11) verankert ist, **dadurch gekennzeichnet, dass** die Ringbuchsenstruktur (11) einen in den Bodenflächenbereich (5c) eintauchenden Axialendabschnitt aufweist, und dass die Ringbuchsenstruktur (11) in diesem Bereich mit einem radial nach außen auskragenden Ringrand (5e) versehen ist.

2. Kupplungsaktuator nach Anspruch 1, **dadurch gekennzeichnet, dass** die Ringbuchsenstruktur (11) aus einem Stahlmaterial gefertigt ist.

3. Kupplungsaktuator nach Anspruch 1 **dadurch gekennzeichnet, dass** die Ringbuchsenstruktur (11) als Tiefziehbauteil gefertigt ist.

4. Kupplungsaktuator nach Anspruch 1 **dadurch gekennzeichnet, dass** die Ringbuchsenstruktur (11) als gewickeltes Bauteil gefertigt ist.

5. Kupplungsaktuator nach Anspruch 4, **dadurch gekennzeichnet, dass** die Ringbuchsenstruktur (11) im Bereich einer Axial-Stoßstelle geschlossen ausgeführt ist.

6. Kupplungsaktuator nach Anspruch 4, **dadurch gekennzeichnet, dass** die Axial-Stoßstelle über eine Schweißnaht geschlossen ist.

7. Kupplungsaktuator nach Anspruch 4, **dadurch gekennzeichnet, dass** die Axial-Stoßstelle über Eingriffsstrukturen geschlossen ist.

8. Kupplungsaktuator nach *Anspruch 1*, **dadurch gekennzeichnet, dass** die Ringbuchsenstruktur (11) einen in den Stirnflächenbereich (5d) eintauchenden Stirnendabschnitt (5f) aufweist, und dass die Ringbuchsenstruktur (11) in diesem Bereich mit einem radial nach außen auskragenden Ringrand versehen ist.

9. Kupplungsaktuator nach An*spruch 1.* ***dadurch* gekennzeichnet, dass** an der Ringbuchsenstruktur (11) ein aus dem Bodenbereich des Ringkorpus (2) hervorstehenden Überstandsbereich ausgebildet ist, und dass in diesem Überstandsbereich ein Befestigungsabschnitt ausgebildet ist, zur Sicherung eines Kupplungsausrücklagers.

10. Kupplungsaktuator nach *Anspruch 1* , **dadurch gekennzeichnet, dass** an der Ringbuchsenstruktur (11) ein aus dem Stirnflächenbereich hervorstehender (5f), oder in diesem Bereich freiliegender Fixierungsabschnitt ausgebildet ist, und dass an diesem Fixierungsabschnitt ein Befestigungsabschnitt ausgebildet ist, zur Sicherung der Ringdichtung (7).

11. Kupplungsaktuator nach *Anspruch 1* , **dadurch gekennzeichnet, dass** die Ringdichtung (7) an die Ringbuchsenstruktur (11) anvulkanisiert ist.

12. Kupplungsaktuator nach *Anspruch 1* , **dadurch gekennzeichnet, dass** die Ringdichtung (7) an eine Ringklammerstruktur angebunden ist, und dass diese Ringklammerstruktur mit der Ringbuchsenstruktur (11) in Eingriff steht.

13. Kupplungsaktuator nach *Anspruch 1* **dadurch gekennzeichnet, dass** die Ringbuchsenstruktur (11) aus einem faserverstärkten Kunststoffmaterial wie z.B. Thermo- oder Duroplast mit min. 40% Füllstoffanteil in Form von Glaskugeln, Glasfasern oder geeigneten mineralischen Füllstoffen gefertigt ist.

14. Kupplungsaktuator nach *Anspruch 1* , **dadurch gekennzeichnet, dass** das zur Bildung des Ringkorpus (2) vorgesehene Kunststoffmaterial an die Ringbuchsenstruktur (11) angespritzt ist.

15. Kupplungsaktuator nach *Anspruch 1* , **dadurch gekennzeichnet, dass** die Ringbuchsenstruktur (11) zumindest im Bereich der Kontaktstellen zum Ringkorpus (2) mit einer Haftvermittlerbeschichtung versehen ist.

16. Ringkolbeneinrichtung für einen Kupplungsaktuator mit einer Führungsstruktur, einer Dichtungseinrichtung (7) zur Abdichtung der Ringkolbeneinrichtung, und einem Ringkolbenschaft, der einen Dichtungsanbindungsabschnitt zur Anbindung der Dichtungseinrichtung, einen Ausrücklageranbindungsabschnitt zur Anbindung eines Kupplungsausrücklagers, und *den* sich zwischen dem Dichtungsanbindungsabschnitt und dem Kupplungsausrücklageranbin-dungsabschnitt erstreckenden Ringkolbenschaft umfasst, ***dadurch gekennzeichnet, dass*** der Ringkolbenschaft aus einem Stahlmaterial gefertigt ist und mit mehreren, den Ringkolbenschaft radial durchsetzenden Durchbrechungen (12) versehen ist,
wobei über diese Durchbrechungen (12) die Führungsstruktur an dem Schaftabschnitt verankert ist.

17. Ringkolbeneinrichtung nach Anspruch *16*, **dadurch gekennzeichnet, dass** die Führungsstruktur aus mehreren Kunststoffsegmenten gebildet ist, und dass diese Kunststoffsegmente von innen an den Ringkolbenschaft angesetzt sind.

18. Ringkolbeneinrichtung nach Anspruch *16*, **dadurch gekennzeichnet, dass** die Führungsstruktur aus mehreren Kunststoffsegmenten gebildet ist, und dass diese Kunststoffsegmente von außen an den Ringkolbenschaft angesetzt sind.

19. Ringkolbeneinrichtung nach Anspruch *18*, **dadurch gekennzeichnet, dass** durch die Kunststoffsegmente eine längsprofilierte Innenwandung gebildet ist.

## Claims

1. Clutch actuator having:
- an annular chamber (3),
- an annular piston (2) which is accommodated in a displaceable manner in the annular chamber (3),
- wherein the annular piston (2) comprises an annular body (5) which is produced from a plastics material and which has an inner circumferential wall (5a), an outer circumferential wall (5b), a base surface region (5c) and a front surface region (5d) which faces away from the base surface region, and
- an annular seal (7) for sealing off the movement gap region of the annular piston (2),
- the annular piston (2) furthermore comprises an annular bush structure (11) which extends between the base surface region (5c) and the front surface region (5d) and which is produced from a highly rigid material,
- wherein said annular bush structure (11) is provided with a plurality of apertures (12) which extend radially through the annular bush structure (11), and the annular body (5) is anchored to the annular bush structure (11) in the region of the apertures (12), **characterized in that** the annular bush structure (11) has an axial end portion which protrudes into the base surface region (5c), and **in that** the annular bush structure (11) is provided in said region with a radially outwardly projecting annular edge (5e).

2. Clutch actuator according to Claim 1, **characterized in that** the annular bush structure (11) is produced from a steel material.

3. Clutch actuator according to Claim 1, **characterized in that** the annular bush structure (11) is produced as a deep-drawn component.

4. Clutch actuator according to Claim 1, **characterized in that** the annular bush structure (11) is produced as a wound component.

5. Clutch actuator according to Claim 4, **characterized in that** the annular bush structure (11) is of closed design in the region of an axial joint.

6. Clutch actuator according to Claim 4, **characterized in that** the axial joint is closed by means of a weld seam.

7. Clutch actuator according to Claim 4, **characterized in that** the axial joint is closed by means of engagement structures.

8. Clutch actuator according to Claim 1, **characterized in that** the annular bush structure (11) has a front end portion (5f) which protrudes into the front surface region (5d), and **in that** the annular bush structure (11) is provided in said region with a radially outwardly projecting annular edge.

9. Clutch actuator according to Claim 1, **characterized in that** a region of projecting length which projects from the base region of the annular body (2) is formed on the annular bush structure (11), and **in that** in said region of projecting length there is formed a fastening portion for securing a clutch disengagement bearing.

10. Clutch actuator according to Claim 1, **characterized in that** a fixing portion which projects from the front surface region (5f) or which is exposed in said region is formed on the annular bush structure (11), and **in that** on said fixing portion there is formed a fastening portion for securing the annular seal (7).

11. Clutch actuator according to Claim 1, **characterized in that** the annular seal (7) is vulcanized onto the annular bush structure (11).

12. Clutch actuator according to Claim 1, **characterized in that** the annular seal (7) is connected to an annular clip structure, and **in that** said annular clip structure engages with the annular bush structure (11).

13. Clutch actuator according to Claim 1, **characterized in that** the annular bush structure (11) is produced from a fibre-reinforced plastic material such as for example thermoplastic or thermosetting material with at least a 40% filler material fraction in the form of glass beads, glass fibres or suitable mineral filler materials.

14. Clutch actuator according to Claim 1, **characterized in that** the plastic material provided for forming the annular body (2) is injection moulded onto the annular bush structure (11).

15. Clutch actuator according to Claim 1, **characterized in that** the annular bush structure (11) is provided with an adhesion-promoting coating at least in the region of the contact points to the annular body (2).

16. Annular piston device for a clutch actuator, having a guide structure, having a seal device (7) for sealing off the annular piston device, and having an annular piston shank which comprises a seal connecting portion for the connection of the seal device, a disengagement bearing connecting portion for the connection of a clutch disengagement bearing, and the annular piston shank which extends between the seal connecting portion and the clutch disengagement bearing connecting portion, **characterized in that** the annular piston shank is produced from a steel material and is provided with a plurality of apertures (12) which extend radially through the annular piston shank, wherein the guide structure is anchored on the shank portion by means of said apertures (12).

17. Annular piston device according to Claim 16, **characterized in that** the guide structure is formed from a plurality of plastic segments, and **in that** said plastic segments are mounted on the annular piston shank from the inside.

18. Annular piston device according to Claim 16, **characterized in that** the guide structure is formed from a plurality of plastic segments, and **in that** said plastic segments are mounted on the annular piston shank from the outside.

19. Annular piston device according to Claim 18, **characterized in that** the plastic segments form a longitudinally profiled inner wall.

## Revendications

1. Actionneur d'embrayage comprenant :
- une chambre annulaire (3),
- un piston annulaire (2) qui est reçu de manière déplaçable dans la chambre annulaire (3),
- le piston annulaire (2) comprenant un corps annulaire (5) qui est fabriqué en un matériau en plastique et une paroi périphérique interne (5a), une paroi périphérique externe (5b), une région de surface de fond (5c) et une région de surface frontale (5d) opposée à la région de surface de fond, et
- un joint d'étanchéité annulaire (7) pour étancher la région d'interstice de déplacement du piston annulaire (2),
- le piston annulaire (2) comprenant en outre une structure de douille annulaire (11) s'étendant entre la région de surface de fond (5c) et la région de surface frontale (5d), fabriquée en un matériau de grande rigidité,
- cette structure de douille annulaire (11) étant pourvue de plusieurs orifices (12) traversant radialement la structure de douille annulaire (11), et le corps annulaire (5) étant ancré dans la région des orifices (12) à la structure de douille annulaire (11), **caractérisé en ce que** la structure de douille annulaire (11) présente une portion d'extrémité axiale pénétrant dans la région de surface de fond (5c), et **en ce que** la structure de douille annulaire (11) est pourvue dans cette région d'un bord annulaire (5e) saillant radialement vers l'extérieur.

2. Actionneur d'embrayage selon la revendication 1, **caractérisé en ce que** la structure de douille annulaire (11) est fabriquée en un matériau en acier.

3. Actionneur d'embrayage selon la revendication 1, **caractérisé en ce que** la structure de douille annulaire (11) est réalisée sous forme de composant embouti profond.

4. Actionneur d'embrayage selon la revendication 1, **caractérisé en ce que** la structure de douille annulaire (11) est réalisée sous forme de composant enroulé.

5. Actionneur d'embrayage selon la revendication 4, **caractérisé en ce que** la structure de douille annulaire (11) est réalisée sous forme fermée dans la région d'une zone de butée axiale.

6. Actionneur d'embrayage selon la revendication 4, **caractérisé en ce que** la zone de butée axiale est fermée par un joint de soudure.

7. Actionneur d'embrayage selon la revendication 4, **caractérisé en ce que** la zone de butée axiale est fermée par des structures d'engagement.

8. Actionneur d'embrayage selon la revendication 1, **caractérisé en ce que** la structure de douille annulaire (11) présente une portion d'extrémité frontale (5f) pénétrant dans la région de surface frontale (5d), et **en ce que** la structure de douille annulaire (11) est pourvue dans cette région d'un bord annulaire saillant radialement vers l'extérieur.

9. Actionneur d'embrayage selon la revendication 1, **caractérisé en ce qu'**une région de projection saillant hors de la région de fond du corps annulaire (2) est réalisée sur la structure de douille annulaire (11), et **en ce que** dans cette région de projection est réalisée une portion d'assujettissement pour la fixation d'un palier de débrayage de l'embrayage.

10. Actionneur d'embrayage selon la revendication 1, **caractérisé en ce qu'**une portion de fixation saillant hors de la région de surface frontale (5f), ou exposée dans cette région, est réalisée sur la structure de douille annulaire (11) et **en ce qu'**une portion d'assujettissement est réalisée sur cette portion de fixation, pour fixer le joint d'étanchéité annulaire (7).

11. Actionneur d'embrayage selon la revendication 1, **caractérisé en ce que** le joint d'étanchéité annulaire (7) est vulcanisé sur la structure de douille annulaire (11).

12. Actionneur d'embrayage selon la revendication 1, **caractérisé en ce que** le joint d'étanchéité annulaire (7) est rattaché à une structure de pince annulaire et **en ce que** cette structure de pince annulaire est en prise avec la structure de douille annulaire (11).

13. Actionneur d'embrayage selon la revendication 1, **caractérisé en ce que** la structure de douille annulaire (11) est fabriquée en un matériau en plastique renforcé par des fibres, comme par exemple un matériau thermoplastique ou duroplastique, ayant au moins 40% de proportion de charge sous forme de billes de verre, de fibres de verre ou de charges minérales appropriées.

14. Actionneur d'embrayage selon la revendication 1, **caractérisé en ce que** le matériau en plastique prévu pour former le corps annulaire (2) est moulé par pulvérisation sur la structure de douille annulaire (11).

15. Actionneur d'embrayage selon la revendication 1, **caractérisé en ce que** la structure de douille annulaire (11) est pourvue au moins dans la région des zones de contact avec le corps annulaire (2) d'un revêtement promoteur d'adhésion.

16. Dispositif de piston annulaire pour un actionneur d'embrayage comprenant une structure de guidage, un dispositif d'étanchéité (7) pour étancher le dispositif de piston annulaire, et un corps de piston annulaire, qui comprend une portion de raccord d'étanchéité devant être rattachée au dispositif d'étanchéité ; une portion de raccord de palier de débrayage devant être rattachée au palier de débrayage de l'embrayage, et le corps de piston annulaire s'étendant entre la portion de raccord d'étanchéité et la portion de raccord de palier de débrayage de l'embrayage, **caractérisé en ce que** le corps de piston annulaire est fabriqué en un matériau en acier et est muni de plusieurs orifices (12) traversant radialement le corps de piston annulaire,
la structure de guidage étant ancrée sur la portion de corps par le biais de ces orifices (12).

17. Dispositif de piston annulaire selon la revendication 16, **caractérisé en ce que** la structure de guidage est formée de plusieurs segments en plastique, et **en ce que** ces segments en plastique sont appliqués depuis l'intérieur contre le corps de piston annulaire.

18. Dispositif de piston annulaire selon la revendication 16, **caractérisé en ce que** la structure de guidage est formée de plusieurs segments en plastique et **en ce que** ces segments en plastique sont appliqués depuis l'extérieur contre le corps de piston annulaire.

19. Dispositif de piston annulaire selon la revendication 18, **caractérisé en ce qu'**une paroi interne profilée en longueur est formée par les segments en plastique.
